# FASCICULE DE BREVET EUROPEEN

(11) **EP 1 514 630 B1**
(45) Date de publication et mention de la délivrance du brevet: **18.04.2007**
(21) Numéro de dépôt: 04370026.9
(22) Date de dépôt: 09.09.2004
(51) Int. Cl.: B23K 11/30, B23K 35/40, B23K 35/22, B23K 35/02

(54) **Electrode de soudage par résistance et son procédé de fabrication**
Elektrode zum Widerstandsschweissen und deren Herstellungsverfahren
Resistance welding electrode and method for its manufacture

(30) Priorité: 10.09.2003 FR 0310640
(43) Date de publication de la demande: 16.03.2005
(73) Titulaire: Le Bronze Industriel S.A., 93177 Bagnolet (FR)
(72) Inventeur: Barbeau, Fabrice, 51000 Chalons en Champagne (FR); Aeschbacher, Jean Claude, 51500 Ville en Selve (FR)
(74) Mandataire: Hennion, Jean-Claude

(56) Documents cités:
- EP-A- 0 097 306
- WO-A-00/01507
- DE-A- 2 554 990
- FR-A- 1 410 358
- GB-A- 1 177 351
- TANAKA Y ET AL: "An alumina dispersion strenghtened copper composite electrode for spot welding" 1987, WELDING INTERNATIONAL, WELDING INSTITUTE. ABINGTON, GB, VOL. 1, NR. 11, PAGE(S) 1074-1078 , XP002120069 ISSN: 0950-7116 * le document en entier *
- PATENT ABSTRACTS OF JAPAN vol. 017, no. 191 (M-1396), 14 avril 1993 (1993-04-14) & JP 04 339575 A (KOBE STEEL LTD), 26 novembre 1992 (1992-11-26)

## Description

L'invention se rapporte au domaine technique des électrodes de soudage par résistance.

On connaît déjà, dans l'art antérieur, un grand nombre de conceptions et modes de fabrication pour de telles électrodes.

Les documents qui vont être cités ci-dessous illustrent cette diversité de solutions techniques.

Le document DE-A-25 54 990 décrit une électrode de soudage par résistance, comprenant un coeur et une enveloppe formés par deux alliages de cuivre différents, et obtenue par filage d'une bilette bi-matière.

Le document FR 2.424.093 RENAULT décrit une électrode de soudage comprenant un corps cylindrique en cupro-chrome ou cupro-chrome-zirconium, sur l'extrémité duquel est fixée une pastille en pseudo alliage dense de tungstène et de cuivre, la fixation étant obtenue par bombardement électronique, laser ou friction. Une telle réalisation antérieure est présentée comme un perfectionnement aux électrodes en cupro-alliage à forte teneur en cuivre tel que cupro-chrome à 1% de chrome ou cupro-chrome-zirconium à 1% de chrome et 0,10% maximum de zirconium, perfectionnement réduisant les risques de collage et d'encrassement lors de la soudure par résistance de toles d'acier galvanisées, électro-zinguées, aluminées, plombées ou recouvertes d'un revêtement métallo-organique. Le pseudo alliage de tungstène et cuivre est obtenu par métallurgie des poudres et contient entre 60 et 80% de tungstène.

Le document EP 0.493.194 SOLLAC décrit une électrode de soudage par résistance comprenant une première partie en cuivre ou alliage à base de cuivre, par exemple 0,1% de zirconium, 1% de chrome et 98,9% de cuivre et une seconde partie en nitrure de titane ou en molybdène. La première partie est soudée par diffusion sur la seconde partie. Dans une réalisation, la première partie et cylindrique de diamètre D et la seconde partie est formée par un cylindre de diamètre inférieur à D ainsi que d'un tronc de cône reliant les deux cylindres. Cette réalisation antérieure est présentée comme un perfectionnement aux électrodes en cuivre nu, ou aux électrodes munies d'une pastille en graphite cuivré, ou de revêtements minces tels que nitrure de titane ou molybdène, perfectionnement augmentant les durées de vie des électrodes, notamment lors du soudage de tôles zinguées, le nitrure de titane ou le molybdène étant chimiquement inertes à l'égard des tôles zinguées.

Le document FR 2.361.967 décrit une électrode à corps en cuivre ou alliage de cuivre dont une partie est revêtue par du nickel ou du béryllium, du cobalt, du fer et les alliages à point de fusion élevé de ces métaux, ce corps d'électrode étant de plus martelé à la grenaille, par exemple par sablage à l'aide de grenailles d'oxyde d'aluminium, avant revêtement, par exemple d'une couche de nickel par galvanoplastie.

Le document FR 2.373.354 NIPPERT décrit une électrode de soudage creuse, un fluide de refroidissement étant introduit dans la cavité interne de l'électrode, cette électrode comprenant une pointe remplaçable et une partie d'emmanchement réutilisable, à la manière de ce qui est décrit notamment dans les brevets américains publiés sous les numéros : 2.138.388, 2.257.566, 2.402.646, 2.411.859, 2.437.740, 2.440.463, 2.472.173, 2.761.973, 2.780.718, 2.795.688, 2.796.514, 2.829.239, 3.310.087, 3.909.581.

Dans ces documents américains antérieurs, l'assemblage de la pointe sur l'emmanchement est assuré par l'un des moyens suivants :
- consoles ou vis de fixation ;
- pressage et enclenchement ;
- brasage ;
- soudage ;
- ajustage serré.

Le document FR 2.373.354 décrit l'emploi d'un GLID COPPER alliage cuivre-aluminium, obtenu par oxydation interne (voir US 3.779.714, US 3.884.876, US 3.893.841), pour former la pointe d'une électrode bimétallique, brasée sur un emmanchement en cuivre extrudé.

Plus précisément, une billette de cuivre et une billette de GLID COPPER sont emboîtées, l'ensemble étant chauffé à 732°C et brasé pour former une ébauche d'extrusion, soumise à extrusion inverse formant la cavité interne de l'électrode.

Le document FR 2.670.699 SOLLAC décrit une électrode de soudage comprenant un corps creux cylindrique brasé à une pastille en cuivre graphite, pastille obtenue par l'imprégnation à chaud de cuivre d'un barreau de graphite, ou frittage.

Le document FR 2.771.038 SOLLAC présente une comparaison des duretés HB, charge à rupture et conductibilité électrique des électrodes de soudage par résistance type Cu-Cr, Cu-Cr-Zr, Cu-Ag, W-Cu, et décrit un traitement thermomécanique d'alliage de cuivre conduisant à un durcissement par précipitation et par affinage de grains pour produire une électrode de soudage par résistance.

Le document US 3.363.086 décrit une électrode de soudage en cuivre, revêtue de rhodium ou de rhénium, ou pourvue d'une pastille de rhodium ou rhénium insérée à force.

Le document US 3.592.994 rappelle les exigences contradictoires qui doivent satisfaire les matériaux formant les électrodes de soudage :
- résistance mécanique à chaud élevée, ce qui n'est pas le cas des alliages de cuivre ;
- conductivités électriques et thermiques élevées, ce qui est en revanche le cas des alliages de cuivre.

Ce document US 3.592.994 présente les alliages Cr-Cu (avec additions de Be, Co, Zr) comme des compromis, et décrit la mise en place d'inserts de renfort mécanique en cuivre-tungstène, ou en tungstène, molybdène.

On peut se référer également aux brevets américains publiés sous les numéros : 3.969.156, 4.071.947, 4.288.024, 4.478.787, 4.588.870, 5.334.814, 5.611.945, 5.914.057, 5.844.194, 6.047.471, 6.225.591 ainsi qu'au document EP 0.097.306.

La demanderesse a constaté que les techniques de fabrication antérieures d'électrodes bimétalliques ou bimatériaux présentent les inconvénients suivants :
- présente d'une interface formant résistance électrique entre la pointe et le corps de l'électrode ;
- auto-expulsion des inserts en tungstène ou molybdène, tantale, par suite de la relaxation des contraintes au coeur de l'électrode, lors des cycles de soudage;
- coût très élevé des inserts en tantale, tungstène ou matériaux type graphite cuivre.

L'auto-expulsion des inserts est d'autant plus fréquente que les inserts réfractaires ont des conductivités thermiques et électriques faibles, ce qui entraîne leur échauffement, d'autant plus localisé que ces inserts sont conventionnellement inertes vis à vis du cuivre, de sorte qu'ils ne sont liés au corps d'électrode en cuivre que par leur insertion mécanique à force.

La fixation d'une pastille réfractaire nécessite soit l'usage d'un matériau d'apport, par exemple pour le brasage, soit l'emploi de moyens techniques très onéreux tels que bombardement électronique ou laser. Ces pastilles offrent certes une résistance mécanique à chaud élevée, mais ceci va au détriment d'une bonne conductivité électrique.

Ces pastilles ne peuvent être redressées en cas de champignonage et des concentrations de contraintes se créent entre pastille et corps d'électrode, du fait des écarts importants de coefficient de dilatation thermique entre les matériaux formant le corps et la pastille de l'électrode.

La demanderesse a cherché à fournir une électrode de soudage par résistance qui ne présente pas les inconvénients de celles connues antérieurement, cette électrode ayant une faible tendance à champignonner, c'est à dire à s'affaisser sur sa face active, ainsi qu'une faible sensibilité au laitonnage, une grande durée de vie, cette électrode comprenant au moins deux matériaux, l'un de ces matériaux formant la face active de l'électrode, possédant des conductivités électriques et thermiques élevées, l'autre matériau étant peu coûteux et formant l'essentiel du volume de l'électrode, les risques de décohésion entre ces deux matériaux, en service, étant très réduits sinon nuls.

A cette fin, l'invention se rapporte selon un premier aspect à une électrode de soudage par résistance comprenant un coeur et une enveloppe formés par deux alliages de cuivre différents, la liaison métallurgique entre le coeur et l'enveloppe étant de faible épaisseur, typiquement de l'ordre du micromètre, sans métal d'apport.

L'électrode présente, selon diverses réalisations, les caractères suivants, le cas échéant combinés :
- la liaison métallurgique entre coeur et enveloppe est assurée au moins en partie par une solution solide ;
- l'alliage formant le coeur est un alliage cuivre-alumine à dispersoïde ou un alliage de cuivre comprenant moins de 1% d'additions d'aluminium, bore, carbone, oxygène et titane ;
- l'alliage formant l'enveloppe est un alliage cuivre-chrome, cuivre-chrome-zirconium ;
- le coeur est axial ou excentré par rapport à l'enveloppe ;
- l'enveloppe est de forme générale cylindrique à partie extrême avant tronconique, le coeur saillant au delà de l'enveloppe pour former la face active de l'électrode ;
- le coeur présente une partie extrême avant tronquée s'étendant entre la face active sensiblement transversale et la partie extrême avant tronconique de l'enveloppe ;
- elle comprend un radiateur essentiellement formé par l'alliage de coeur.

L'invention se rapporte selon un deuxième aspect, à un procédé de fabrication d'une électrode telle que présentée ci-dessus, ce procédé comprenant une étape de filage d'une billette bi-matière obtenue par insertion à force d'une billette interne en alliage devant former le coeur dans un tube ou un corps creux en alliage devant former l'enveloppe de l'électrode, dans lequel le filage de la billette bi-matière est réalisé à une température de l'ordre de 860 à 880°C,

Le procédé de fabrication de l'électrode présente, selon diverses réalisations, les caractères suivants, le cas échéant combinés :
- le filage est réalisé en filière plate ou en filière conique, avec trempe sous eau ;
- la billette interne en alliage devant former le coeur est obtenue par filage d'un conteneur en cuivre dans lequel est placée une poudre de composition correspondant à cet alliage devant former le coeur ;
- le filage de la billette interne est réalisé à une température comprise entre 700 et 900°C, et plus particulièrement à 750°C environ ;
- la billette interne en alliage devant former le coeur est obtenue par compactage à froid d'une poudre, dans une enceinte en cuivre pur ou faiblement allié, et chauffage entre 700 et 900°C, plus particulièrement 870°C environ ;
- le tube devant former l'enveloppe de l'électrode est obtenu par extrusion, le diamètre intérieur du tube étant inférieur de quelques millimètres au diamètre extérieur de la billette en alliage devant former le coeur, un alésage étant réalisé dans le tube en laissant une partie non alésée de blocage de la billette intérieure ;
- le corps creux devant former l'enveloppe de l'électrode est obtenu par refoulement sous presse à chaud ;
- il comprend une étape d'étirage à froid ou à température inférieure à 400°C de la barre issue du filage de la billette bi-matière ;
- il comprend une étape de frappe à froid ou d'usinage de la barre étirée, de sorte à former une partie extrême tronconique à l'électrode ;
- le diamètre du cercle circonscrit extérieur de la billette bi-matière est au moins cinq fois plus grand que le diamètre circonscrit extérieur de la barre bi-métal obtenue par filage ;
- le rapport entre les sections de billette interne et de tube ou corps creux est sensiblement identique au rapport des sections entre coeur et enveloppe ;
- il ne comprend pas de traitement de dégazage ou de confinement sous atmosphère contrôlée des alliages constituant la billette bi-matière à filer.

D'autres objets et avantages de l'invention apparaîtront au cours de la description suivante de modes de réalisation donnés à titre d'exemples, description qui va être effectuée en se référant aux dessins annexés dans lesquels :
- la figure 1 est une vue schématique en coupe longitudinale d'une électrode de soudage par résistance selon l'invention ;
- la figure 2 est une vue latérale selon la flèche II de la figure 1 ;
- la figure 3 est une vue analogue à la figure 1 d'une électrode à pointe femelle ;
- la figure 4 est une vue analogue aux figures 1 et 3 d'une électrode à pointe mâle ;
- les figures 5,6,7 sont des vues schématiques de trois étapes d'un procédé de fabrication d'électrodes de soudage par résistance selon l'invention.

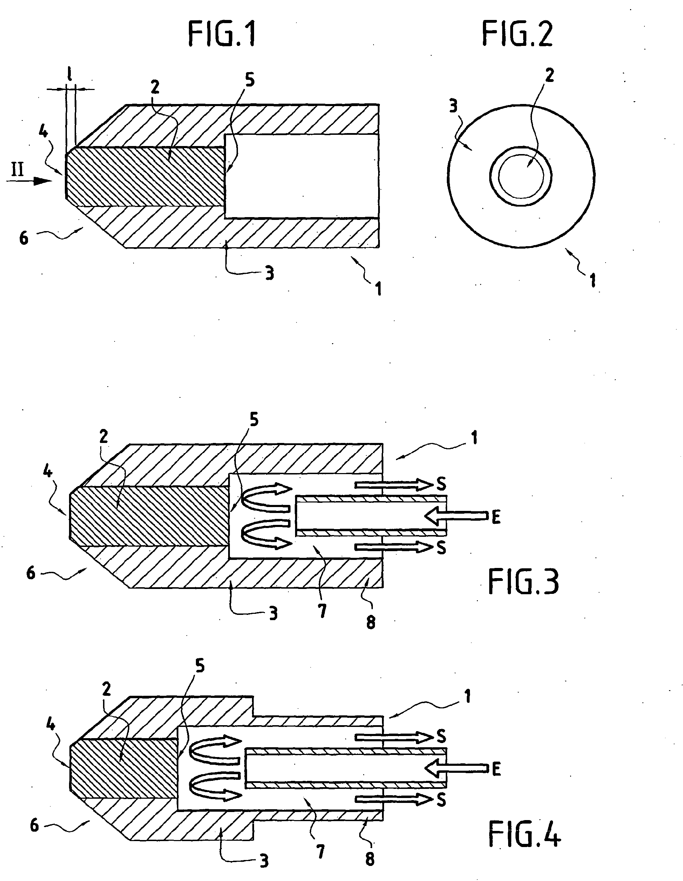

On se rapporte tout d'abord aux figures 1 et 2.

L'électrode 1 comprend un coeur 2 et une enveloppe 3. La face active 4 de l'électrode 1 est formée par une face transversale du matériau constituant le coeur 2. Cette face active 4 est destinée à venir en contact sous pression avec le matériau à souder.

Cette face active subit des cycles thermiques intenses lors du soudage, la surface de l'électrode 1 pouvant atteindre 900°C. Cette face active 4 est également soumise au laitonnage. Lors du soudage de tôles, les efforts de serrage peuvent être de l'ordre de 900 déca newton.

Le radiateur 5 de l'électrode 1 est essentiellement constitué par le matériau formant le coeur 2, le reste de la structure de l'électrode étant essentiellement formé par le matériau de l'enveloppe 3.

Ainsi qu'il est connu en soi, l'électrode 1 se présente sous la forme générale d'un corps cylindrique à partie extrême tronconique. Dans les réalisations représentées sur les figures 1 à 4, le coeur 2 et l'enveloppe 3 sont concentriques, le coeur 2 saillant sur une longueur 1 par rapport à l'enveloppe 3, dans la partie extrême tronconique 6 de l'électrode 1.

Dans d'autre modes de réalisation non représentés, le coeur 2 est excentré par rapport à l'enveloppe 3.

Le refroidissement de l'électrode est assuré, de manière connue en soi, par la circulation d'un fluide tel que de l'eau en partie arrière 7 de l'électrode. Une jupe 8 permet le montage de l'électrode 1 sur l'outil de soudage et le bon positionnement de la face active 4. La circulation du fluide de refroidissement est représentée par les flèches d'entrée E et de sortie S sur les figures 3 et 4.

Le matériau constituant le coeur 2, par la suite dénommé Bicop, est un alliage à base de cuivre à dispersoïde.

Dans un mode de réalisation, ce Bicop contient jusqu'à 0,6% d'alumine A1203. Dans un autre mode de réalisation, ce Bicop contient moins de 1% de micro addition d'aluminium, bore, carbone et oxygène, titane.

Le tableau ci-dessous présente les propriétés du Bicop, en comparaison aux alliages conventionnels utilisés pour les électrodes de soudage par résistance : alliage de cuivre type Cu-Zr, Cu-Cr-Zr, et GlideCop.

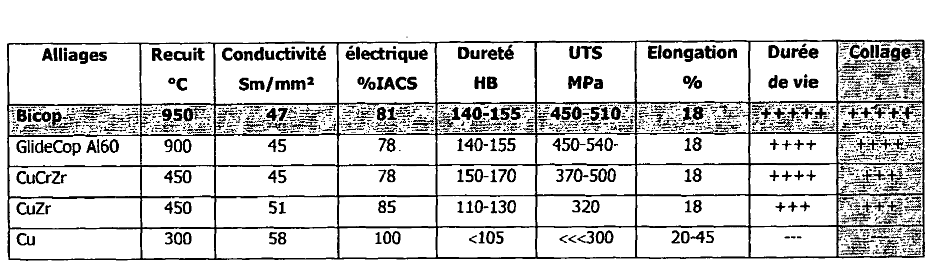

Ainsi qu'il apparaît sur ce tableau, le Bicop présente une bonne tenue au collage et des conductivités électriques et thermiques élevées. Sa température de recuit est de l'ordre de 950°C de sorte que le Bicop résiste, sans s'adoucir, à des cycles thermiques allant jusqu'à 900°C. L'électrode 1 est peu sensible au laitonnage, l'absence d'adoucissement du Bicop et sa faible sensibilité au laitonnage font que l'électrode 1 est peu sujette à champignonner, la surface de la face active 4 variant peu sous l'effet de la pression de serrage lors du soudage.

L'affaissement de la face active 4, conventionnellement observé dans les électrodes de l'art antérieur, dégrade la qualité de la soudure, l'augmentation de la surface active diminuant la densité de courant de soudage.

Le Bicop cuivre-alumine peut être obtenu par métallurgie des poudres, par oxydation interne, le Bicop cuivre-aluminium-bore-carbone-oxygène-titane pouvant être issu d'un broyage haute énergie ou de mécano synthèse.

L'enveloppe 3 de l'électrode 1 est en alliage de cuivre, type cuivre-chrome ou cuivre-chrome-zirconium. Cette enveloppe possède ainsi des caractéristiques mécaniques, électriques et de mise en forme significativement différentes du coeur 2.

La demanderesse s'est attachée à obtenir une électrode de structure générale telle que présentée ci-dessus dans laquelle existe une liaison métallurgique entre coeur et enveloppe fine, régulière, homogène et continue, cette liaison étant obtenue sans apport de métal et n'étant pas constituée de composés de réactions fragiles telles que couches d'oxydation, composés inter-métalliques ou céramiques.

Une telle qualité de liaison métallurgique permet d'éviter une résistance thermique de transfert entre le coeur et l'enveloppe, ainsi qu'une résistance électrique d'interface pouvant engendrer un échauffement ohmique interne de l'électrode.

La demanderesse s'est attachée à ce que cette liaison métallurgique ne soit pas sensible à l'adoucissement lors des cycles de soudage ou à la génération de contrainte qui provoque, dans les électrodes de l'art antérieur, des risques de désassemblage des inserts.

La liaison métallurgique de tenue par brasage entraîne une résistance électrique et est sensible à l'adoucissement.

Cette caractéristique technique qu'est la liaison métallurgique fine, régulière, homogène et continue entre coeur et enveloppe, est obtenue par la mise en oeuvre d'un procédé qui va maintenant être décrit.

### Première étape - compactage de poudres

### Premier mode de réalisation de cette première étape

Une poudre de composition correspondant au Bicop est légèrement tassée par vibration dans un conteneur en cuivre hermétique, cette opération étant effectuée sous atmosphère contrôlée, de préférence azote ou argon.

La billette est équipée d'un système d'élimination de surpression et placée dans un four de chauffage de presse à filer pour être chauffée entre 700 et 900°C.

La demanderesse a observé qu'il est préférable de maintenir la température de chauffage inférieure à 900°C environ de sorte à maintenir de bonnes caractéristiques mécaniques pour le Bicop. Avantageusement, cette température de chauffage est de l'ordre de 750°C.

La billette est maintenue à température pendant un temps d'homogénéisation de l'ordre de une heure puis extrudée par filage direct ou inverse en filière plate (pour éliminer l'enveloppe de cuivre) ou conique sur presse à filer.

Lorsque le filage est effectué en filière conique, des billettes de 180mm de diamètre peuvent être amenées en diamètre 35mm, 33mm et 30mm. La vitesse d'avance du piston de presse de filage peut être de l'ordre de 2mm seconde et aller jusqu'à 60mm par seconde, une vitesse de 30mm par seconde donnant des résultats industriellement satisfaisants.

Lorsque les rapports de filage sont de l'ordre de 2 à 3, il est avantageux de placer devant la billette contenant la poudre une billette préchauffée de cuivre pur ou faiblement allié de même diamètre mais de longueur modeste, de l'ordre de 100mm ou moins. Cette billette de cuivre pur ou faiblement allié augmente la pression de filage de sorte à assurer un bon compactage de la poudre de Bicop.

Dans un variante, de sorte à pouvoir se passer de cette billette en cuivre pur ou faiblement allié devant être éliminée sur le produit extrudé, le filage est réalisé en continu avec filière conique, la billette suivante poussant la précédente en dehors de la filière.

Le produit filé obtenu présente une densité de 1 par rapport au produit massif identique à l'alliage de cuivre, les caractéristiques mécaniques obtenues étant typiquement de 140 HB, et 410 MPa de résistance à rupture, pour un allongement de 12%.

### Deuxième mode de réalisation de cette première étape

La poudre de composition correspondant au Bicop est compactée à froid, par exemple par compactage isostatique, pressage à froid en matrice fermée ou extrusion à froid, préférentiellement avec une enveloppe en cuivre pur ou faiblement allié.

On obtient ainsi un produit ayant une densité de l'ordre de 70 à 80%, non friable. La billette obtenue est placée dans un four de chauffage de presse à filer pour être chauffée entre 700 et 900°C, une température de 870°C ayant donné des résultats industriellement satisfaisants.

La suite des opérations de filage peut être conduite comme décrite précédemment en référence au premier mode de réalisation de cette première étape de fabrication.

### Seconde étape

Une billette creuse en alliage de cuivre type Cu-Cr, Cu-Cr-Zr est élaborée pour constituer l'enveloppe 3 de l'électrode 1.

Selon une réalisation, cette billette creuse est directement produite sous forme de tubes avec un diamètre intérieur inférieur d'au moins 5mm à la billette préfilée de Bicop, la cote exacte étant obtenue par alésage, l'insertion de la billette en Bicop étant réalisée à sec en force.

Dans un autre mode de réalisation, une billette pleine est tout d'abord chauffée entre 900 et 1050°C. Lorsque la matière est à température, elle est placée dans une matrice, un poinçon centré de diamètre inférieur à celui de la billette de Bicop perforant la billette en alliage de cuivre, la matière refoulant pour former un corps creux, ce corps creux étant alors alésé, l'insertion de la billette en Bicop dans ce corps creux étant réalisé à sec en force.

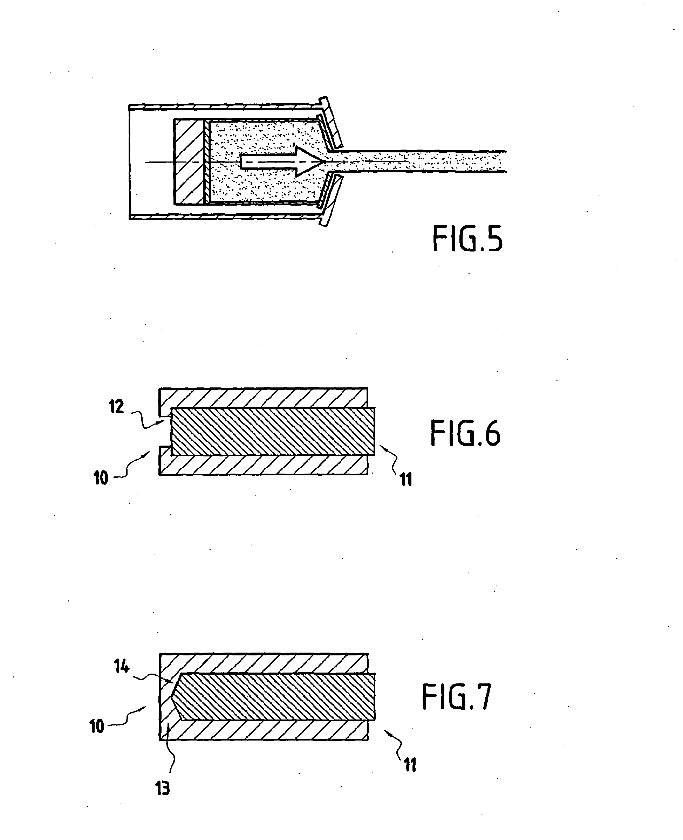

Les figures 6 et 7 illustrent le produit obtenu après cette seconde étape de fabrication, selon la première et la deuxième variante respectivement.

Sur ces figures 6 et 7, la partie avant 10 de la billette bi-matière est celle qui sera filée en première au cours de la troisième étape de fabrication, la partie arrière étant celle qui sera au contact du grain de poussée.

Ainsi qu'il apparaît en figure 6, le tube en cuivre, cuivre-chrome, cuivre-chrome-zirconium est alésé en laissant une partie non alésée 12 servant de blocage à la billette de Bicop interne, cette partie non alésée 12 s'étendant sur quelques millimètres.

Dans le mode de réalisation de la figure 7, le corps creux en cuivre, cuivre-chrome, cuivre-chrome-zirconium, est alésé à la cote exacte de la billette interne en Bicop avec un fond 13 de quelques millimètres d'épaisseur définissant une paroi de fond 14 au corps creux, de forme complémentaire au profil de la billette interne en Bicop.

Après emmanchement à force de la billette en Bicop dans le tube creux ou le corps creux en cuivre, cuivre-chrome, cuivre-chrome-zirconium, il subsiste avantageusement un léger dépassement de cette billette interne en Bicop en partie arrière 11 de la billette bi-matières.

### Troisième étape

La billette bi-matières issue de la deuxième étape et schématisée en figures 6 et 7 est placée dans un four de préchauffage de presse à filer.

Le filage direct ou indirect peut être réalisé en filière plate ou conique.

La vitesse d'avance du piston de la presse d'extrusion peut être comprise entre 10 et 80mm par seconde, une vitesse de 20mm par seconde donnant de bons résultats industriels. La filière mono-trou présente un diamètre intérieur tel que le rapport de filage est élevé, de l'ordre de 20 à 45mm, le diamètre extérieur de la billette bi-matière étant de l'ordre de 170mm.

La température de filage est de l'ordre de 860 à 880°C.

La demanderesse a constaté que le produit obtenu présente une liaison métallurgique fine, régulière, homogène et continue entre le Bicop formant le coeur 2 et l'alliage de cuivre, cuivre-chrome, cuivre-chrome-zirconium formant l'enveloppe 3 de l'électrode 1, la zone de transition entre les deux alliages étant de très faible étendue, typiquement inférieure au micromètre.

### Quatrième étape

La barre obtenue par filage lors de la troisième étape était tirée à froid ou à une température inférieure à 400°C, sans décohésion ni défaut périodique dans le matériau.

### Cinquième étape

L'électrode 1 est obtenue par exemple par frappe à froid ou usinage, aucune décohésion ni défaut n'ayant été observé par la demanderesse au coeur des électrodes.

Aucun vide de Kirkendal n'a pu être mis en évidence à l'interface entre coeur et enveloppe. Des essais de diffusion effectués par la demanderesse ont montré que la vitesse de diffusion entre le matériau constituant le coeur et le matériau constituant l'enveloppe de l'électrode est très faible et tend rapidement vers 0, la zone de solution solide restant continue est de faible épaisseur.

Lorsque qu'une barre bi-matière est obtenue à l'issu de la deuxième étape du procédé décrit ci-dessus est coupée en son milieu dans le sens long, aucun phénomène de décohésion n'intervient lors du relâchement des contraintes de frettage.

Les cycles thermiques lors du soudage, y compris jusqu'à 900°C peuvent provoquer un adoucissement de l'alliage cuivre-chrome-zirconium, cuivre-chrome, ou de l'alliage à base de cuivre formant l'enveloppe 3.

Toutefois, aucune décohésion entre coeur et enveloppe n'a été observée.

## Revendications

1. Electrode de soudage par résistance, **caractérisée en ce qu'**elle comprend un coeur (2) et une enveloppe (3) formés par deux alliages de cuivre différents, **caractérisée en ce que** la liaison métallurgique entre le coeur (2) et l'enveloppe (3) est assurée par une zone de transition entre les deux alliages de faible épaisseur typiquement de l'ordre du micromètre et constituée au moins en partie par une solution solide.

2. Electrode de soudage selon la revendication 1, **caractérisée en ce que** l'alliage formant le coeur (2) est un alliage cuivre-alumine à dispersoïde ou un alliage de cuivre comprenant moins de 1% d'additions d'aluminium, bore, carbone, oxygène, titane.

3. Electrode de soudage selon l'une quelconque des revendications 1 ou 2, **caractérisé en ce que** l'alliage formant l'enveloppe (3) est un alliage cuivre-chrome, cuivre-chrome-zirconium.

4. Electrode de soudage selon l'une quelconque des revendications 1 à 3, **caractérisée en ce que** le coeur (2) est axial ou excentré par rapport à l'enveloppe (3).

5. Electrode de soudage selon l'une quelconque des revendications 1 à 4, **caractérisée en ce que** l'enveloppe (3) est de forme générale cylindrique à partie extrême avant tronconique, le coeur (2) saillant au delà de l'enveloppe (3) pour former la face active (4) de l'électrode (1).

6. Electrode de soudage selon la revendication 5, **caractérisée en ce que** le coeur (2) présente une partie extrême avant tronquée s'étendant entre la face active (4) sensiblement transversale et la partie extrême avant tronconique de l'enveloppe (3).

7. Electrode de soudage selon l'une quelconque des revendications 1 à 6, **caractérisée en ce qu'**elle comprend un radiateur essentiellement formé par l'alliage de coeur (2).

8. Procédé de fabrication d'une électrode de soudage telle que présentée dans l'une quelconque des revendications 1 à 7, comprenant une étape de filage d'une billette bi-matière obtenue par insertion à force d'une billette interne en alliage devant former le coeur (2) dans un tube ou un corps creux en alliage devant former l'enveloppe (3) de l'électrode (1), le filage de la billette bi-matière étant réalisé à une température de l'ordre de 860° à 880°C.

9. Procédé selon la revendication 8, **caractérisé en ce que** le filage est réalisé en filière plate ou en filière conique, avec trempe sous eau.

10. Procédé selon l'une quelconque des revendications 8 et 9, **caractérisé en ce que** la billette interne en alliage devant former le coeur (2) est obtenue par filage d'un conteneur en cuivre dans lequel est placée une poudre de composition correspondant à cet alliage devant former le coeur (2).

11. Procédé selon la revendication 10, **caractérisé en ce que** le filage de la billette interne est réalisé à une température comprise entre 700 et 900°C, et plus particulièrement à 750°C environ.

12. Procédé selon l'une quelconque des revendications 8 à 11, **caractérisé en ce que** la billette interne en alliage devant former le coeur (2) est obtenue par compactage d'une poudre, dans une enceinte en cuivre pur ou faiblement allié, et chauffage entre 700 et 900°C, plus particulièrement 870°C environ.

13. Procédé selon l'une quelconque des revendications 8 à 12, **caractérisé en ce que** le tube devant former l'enveloppe de l'électrode est obtenu par extrusion, le diamètre intérieur du tube étant inférieur de quelques millimètres au diamètre extérieur de la billette en alliage devant former le coeur (2), un alésage étant réalisé dans le tube en laissant une partie non alésée de blocage de la billette intérieure.

14. Procédé selon l'une quelconque des revendications 8 à 13, **caractérisé en ce que** le corps creux devant former l'enveloppe de l'électrode est obtenu par refoulement sous presse à chaud.

15. Procédé selon l'une quelconque des revendications 8 à 14, **caractérisé en ce qu'**il comprend une étape d'étirage à froid ou à température inférieure à 400°C de la barre issue du filage de la billette bi-matière.

16. Procédé selon la revendication 15, **caractérisé en ce qu'**il comprend une étape de frappe à froid ou d'usinage de la barre étirée, de sorte à former une partie extrême tronconique à l'électrode.

17. Procédé selon l'une quelconque des revendications 8 à 16, **caractérisé en ce que** le diamètre du cercle circonscrit extérieur de la billette bi-matière est au moins cinq fois plus grand que le diamètre circonscrit extérieur de la barre bi-métal obtenue par filage.

18. Procédé selon l'une quelconque des revendications 8 à 17, **caractérisé en ce que** le rapport entre les sections de billette interne et de tube ou corps creux est sensiblement identique au rapport des sections entre coeur et enveloppe.

19. Procédé selon l'une quelconque des revendications 8 à 18, **caractérisé en ce qu'**il ne comprend pas de traitement de dégazage ou de confinement sous atmosphère contrôlée des alliages constituant la billette bi-matière à filer.

## Claims

1. A resistance welding electrode, **characterised in that** it comprises a core (2) and a shell (3) formed by two different copper alloys, the electrode being **characterised in that** the metallurgical bond between the core (2) and the shell (3) is guaranteed by a transition zone between the two alloys that are thin, typically of around one micron, and consists at least in part, of a solid solution.

2. A welding electrode according to claim 1, **characterised in that** the alloy making up the core (2) is a dispersoid copper-alumina alloy, or a copper alloy containing less than 1% aluminium, boron, carbon, oxygen, titanium addition.

3. A welding electrode according to claim 1 or 2, **characterised in that** the alloy making up the shell (3) is a copper-chromium or copper-chromium-zirconium alloy.

4. A welding electrode according to any one of claims 1 to 3, **characterised in that** the core (2) is either axial or off-centred with respect to the shell (3).

5. A welding electrode according to any one of claims 1 to 4, **characterised in that** the shell (3) is generally cylindrical in shape, with a truncated cone-shaped front end, the core (2) protruding from the shell (3) to form the active surface (4) of the electrode (1).

6. A welding electrode according to claim 5, **characterised in that** the core (2) possesses a truncated front end extending from the substantially transverse active surface (4) and the truncated cone-shaped front end of the shell (3).

7. A welding electrode according to any one of claims 1 to 6, **characterised in that** it comprises a radiator, essentially made from the same alloy as the core (2).

8. A welding electrode manufacturing method as presented in any one of claims 1 to 7, comprising a bi-material billet extrusion step, obtained by force insertion of an inner alloy billet making up the core (2) into an alloy tube or hollow body making up the shell (3) of the electrode (1), with extrusion of the bi-material billet being performed at a temperature of approximately 860 to 880°C.

9. A method according to claim 8, **characterised in that** extrusion is performed using a flat or conical extrusion die, with water tempering.

10. A method according to claims 8 and 9, **characterised in that** the inner alloy billet forming the core (2) is obtained by extrusion of a copper container in which is placed a powder whose composition corresponds to the alloy forming the core (2).

11. A method according to claim 10, **characterised in that** extrusion of the inner billet is performed at a temperature of between 700 and 900°C, and more specifically at approximately 750°C.

12. A method according to any one of claims 8 to 11, **characterised in that** the inner alloy billet forming the core (2) is obtained by compaction of a powder, in a pure or low alloy copper enclosure heated to between 700 and 900°C and more particularly to approximately 870°C.

13. A method according to any one of claims 8 to 12, **characterised in that** the tube forming the electrode shell is obtained by extrusion, the inner diameter of the tube being inferior by a few millimetres to the outer diameter of the alloy billet forming the core (2), a bore being performed in the tube, leaving a non-bored part for blocking the inner billet.

14. A method according to any one of claims 8 to 13, **characterised in that** the hollow body forming the electrode shell is obtained by hot press expulsion.

15. A method according to any one of claims 8 to 14, **characterised in that** it comprises a drawing step, performed cold, or at a temperature inferior to 400°C, of the bar produced by extrusion of the bi-material billet.

16. A method according to claim 15, **characterised in that** it comprises a cold hammering or machining step of the drawn bar in such a manner as to form a truncated cone-shaped end for the electrode.

17. A method according to any one of claims 8 to 16, **characterised in that** the diameter of the outer circumscribed circle of the bi-material billet is at least five times larger than the outer circumscribed diameter of the bimetallic bar obtained by extrusion.

18. A method according to any one of claims 8 to 17, **characterised in that** the cross-section ratio between inner billet and tube or hollow body is approximately identical to the cross section ratio between core and shell.

19. A method according to any one of claims 8 to 18, **characterised in that** it does not comprise a degassing or controlled atmosphere confinement treatment of the alloys making up the bi-material billet to be extruded.

## Patentansprüche

1. Widerstandsschweißelektrode, **dadurch gekennzeichnet, daß** sie einen Kern (2) und eine Hülle (3), die aus zwei unterschiedlichen Kupferlegierungen gebildet sind, umfaßt, **dadurch gekennzeichnet, daß** die metallurgische Verbindung zwischen dem Kern (2) und der Hülle (3) durch eine Übergangszone zwischen den beiden Legierungen von geringer Dicke, typischerweise von ungefähr einem Mikrometer, gewährleistet ist, die zumindest teilweise von einer festen Lösung gebildet ist.

2. Schweißelektrode nach Anspruch 1, **dadurch gekennzeichnet, daß** die den Kern (2) bildende Legierung eine Kupfer-Aluminiumoxid-Legierung mit Dispersoid oder eine Kupferlegierung, umfassend mindestens 1 % Zusätze von Aluminium, Bor, Kohlenstoff, Sauerstoff, Titan, ist.

3. Schweißelektrode nach einem der Ansprüche 1 oder 2, **dadurch gekennzeichnet, daß** die die Hülle (3) bildende Legierung eine Kupfer-Chrom-, Kupfer-Chrom-Zirkonium-Legierung ist.

4. Schweißelektrode nach einem der Ansprüche 1 bis 3, **dadurch gekennzeichnet, daß** der Kern (2) axial oder exzentrisch in Bezug auf die Hülle (3) ist.

5. Schweißelektrode nach einem der Ansprüche 1 bis 4, **dadurch gekennzeichnet, daß** die Hülle (3) eine allgemeine zylindrische Form mit einem kegelstumpfartigen vorderen äußersten Teil hat, wobei der Kern (2) über die Hülle (3) vorspringt, um die aktive Fläche (4) der Elektrode (1) zu bilden.

6. Schweißelektrode nach Anspruch 5, **dadurch gekennzeichnet, daß** der Kern (2) einen stumpfen vorderen äußersten Teil aufweist, der sich zwischen der im wesentlichen quer verlaufenden aktiven Fläche (4) und dem kegelstumpfartigen vorderen äußersten Teil der Hülle (3) erstreckt.

7. Schweißelektrode nach einem der Ansprüche 1 bis 6, **dadurch gekennzeichnet, daß** sie einen Radiator umfaßt, der der im wesentlichen aus der Legierung des Kerns (2) gebildet ist.

8. Verfahren zur Herstellung einer Schweißelektrode, wie in einem der Ansprüche 1 bis 7 dargestellt, umfassend einen Schritt des Ziehens eines Barrens aus zwei Materialien durch Einsetzen mit Kraft eines inneren Barrens aus einer Legierung, der den Kern (2) bilden soll, in ein Rohr oder einen Hohlkörper aus einer Legierung, das oder der die Hülle (3) der Elektrode (1) bilden soll, wobei das Ziehen des Barrens aus zwei Materialien bei einer Temperatur in der Größenordnung von 860 bis 880 °C erfolgt.

9. Verfahren nach Anspruch 8, **dadurch gekennzeichnet, daß** das Ziehen mit einem flachen Zieheisen oder einem konischen Zieheisen und Aushärtung unter Wasser erfolgt.

10. Verfahren nach einem der Ansprüche 8 und 9, **dadurch gekennzeichnet, daß** der innere Barren aus einer Legierung, der den Kern (2) bilden soll, durch Ziehen eines Kupferbehälters erhalten wird, in dem ein Pulver mit einer Zusammensetzung enthalten ist, die der Legierung entspricht, die den Kern (2) bilden soll.

11. Verfahren nach Anspruch 10, **dadurch gekennzeichnet, daß** das Ziehen des inneren Barrens bei einer Temperatur zwischen 700 und 900 °C und insbesondere bei ungefähr 750 °C erfolgt.

12. Verfahren nach einem der Ansprüche 8 bis 11, **dadurch gekennzeichnet, daß** der innere Barren aus einer Legierung, der den Kern (2) bilden soll, durch Verdichten eines Pulvers in einem Raum aus reinem oder geringfügig legiertem Kupfer und Erhitzen auf zwischen 700 und 900 °C, insbesondere ungefähr 870 °C, erhalten wird.

13. Verfahren nach einem der Ansprüche 8 bis 12, **dadurch gekennzeichnet, daß** das Rohr, das die Hülle der Elektrode bilden soll, durch Extrusion erhalten wird, wobei der Innendurchmesser des Rohrs einige Millimeter kleiner ist als der Außendurchmesser des Barrens aus einer Legierung, der den Kern (2) bilden soll, wobei eine Bohrung in dem Rohr vorgesehen wird, wobei ein Teil ohne Bohrung bleibt, um den inneren Barren zu blockieren.

14. Verfahren nach einem der Ansprüche 8 bis 13, **dadurch gekennzeichnet, daß** der Hohlkörper, der die Hülle der Elektrode bilden soll, durch Stauchen in einer Warmpresse erhalten wird.

15. Verfahren nach einem der Ansprüche 8 bis 14, **dadurch gekennzeichnet, daß** es einen Schritt des Kaltziehens oder des Ziehens bei einer Temperatur unter 400 °C des Stabes, der vom Ziehen des Barrens aus zwei Materialien stammt, umfaßt.

16. Verfahren nach Anspruch 15, **dadurch gekennzeichnet, daß** es einen Schritt des Kaltprägens oder der Bearbeitung des gezogenen Stabes umfaßt, um einen kegelstumpfartigen äußeren Teil an der Elektrode zu bilden.

17. Verfahren nach einem der Ansprüche 8 bis 16, **dadurch gekennzeichnet, daß** der Durchmesser des äußeren umschriebenen Kreises des Barrens aus zwei Materialien mindestens fünfmal größer als der umschriebene Außendurchmesser des durch Ziehen hergestellten Bimetallstabes ist.

18. Verfahren nach einem der Ansprüche 8 bis 17, **dadurch gekennzeichnet, daß** das Verhältnis zwischen den Abschnitten des inneren Barrens und des Rohrs oder Hohlkörpers im wesentlichen identisch mit dem Verhältnis der Abschnitte zwischen dem Kern und der Hülle ist.

19. Verfahren nach einem der Ansprüche 8 bis 18, **dadurch gekennzeichnet, daß** es keine Behandlung der Entgasung oder Eingrenzung unter kontrollierter Atmosphäre der Legierungen, die den zu ziehenden Barren aus zwei Materialien bilden, umfaßt.
